# EUROPEAN PATENT SPECIFICATION

(11) **EP 0 525 937 B1**
(45) Date of publication and mention of the grant of the patent: **10.07.1996**
(21) Application number: 92304121.4
(22) Date of filing: 07.05.1992
(51) Int. Cl.: F16H 37/02

(54) **Continuously variable transmission**
Stufenlos verstellbares Getriebe
Transmission à variation de vitesses continue

(30) Priority: 28.06.1991 US 723249
(43) Date of publication of application: 03.02.1993
(73) Proprietor: BORG-WARNER AUTOMOTIVE, INC., Sterling Heights, Michigan 48311-8022 (US)
(72) Inventor: Robbins, Francis B., Dryden, N.Y. 13053 (US)
(74) Representative: Allden, Thomas Stanley

(56) References cited:
- GB-A- 2 064 683
- 5ATENT ABSTRACTS OF JAPAN vol. 10, no. 122 (M-476)(2179) 7 May 1986 & JP-A-60 249 757 (NISSAN) 10 December 1985
- PATENT ABSTRACTS OF JAPAN vol. 9, no. 231 (M-414)(1954) 18 September 1985 & JP-A-60 088 266 (TOYOTA) 18 May 1985
- PATENT ABSTRACTS OF JAPAN vol. 9, no. 235 (M-415)(1958) 21 September 1985 & JP-A-60 091 058 (TOYOTA) 22 May 1985
- PATENT ABSTRACTS OF JAPAN vol. 13, no. 71 (M-799)17 February 1989 & JP-A-63 270 967 (MAZDA) 8 November 1988

## Description

This invention relates to continuously variable transmissions.

Continuously variable transmissions and differential combinations for vehicles have been under development for several years. These units have a driven input shaft with a first variable drive pulley, a driven shaft with a second variable drive pulley and a v-belt trained around the two pulleys. The first variable drive pulley on the input shaft has a fixed sheave and an adjustable sheave. The adjustable sheave is moved axially along the input shaft towards or away from the fixed sheave to change the effective diameter of the first variable drive pulley. The second variable drive pulley on the driven shaft includes a fixed sheave and an adjustable sheave that is moved axially along the driven shaft to change the effective diameter of the second variable drive pulley. The adjustable sheave of the second variable drive pulley is spring biased and hydraulically biased toward the fixed sheave so that the second variable drive pulley changes its effective diameter in response to changes in the effective diameter of the first variable drive pulley and so that tension on the v-belt is maintained.

The driven shaft drives a reversible gear train. The reversible gear train drives a differential through a speed reduction system. The speed reduction system can be reduction gears or a chain trained around a drive sprocket and a driven sprocket. The differential drives the axle shafts on which the wheels are mounted.

The transmission input shaft is driven by a power source at substantially higher speed than the speed at which the axle shafts turn. The v-belt and the first and second variable drive pulleys drive the output shaft at speeds that are slower than, equal to or higher than the input shaft speed. Due to the fact that the driven shaft may be driven faster than the input shaft, substantial speed reduction is required between the driven shaft with the second variable drive pulley and the axle shafts.

The speed reduction systems used in the past have required substantial space which is not available in many vehicle applications. The single stage speed reduction also reduces the ability to change the fixed ratios.

The closest prior art is represented by JP-A 60-249757 which generally discloses a continuously variable transmission having a first variable drive pulley, a second variable drive pulley, a v-belt trained around the first and second variable drive pulleys, and a speed reduction drive driven by the second variable drive pulley, said continuously variable transmission including a fixed ratio planetary reduction drive with a sun gear, a reversible gear drive, and axle shafts driven by a differential, said differential being driven by said fixed ratio planetary reduction drive.

An object of the present invention is to provide an efficient and more compact vehicle drive chain.

In accordance with the present invention as claimed, this object is accomplished in that the aforementioned generally disclosed continuously variable transmission is characterized in that the reversible gear drive is driven by the speed reduction drive, and the fixed ratio planetary reduction drive with the sun gear is axially spaced from and driven by the reversible gear drive in one direction or another.

A preferred continuously variable transmission (C.V.T.) constructed in accordance with the invention includes a variable speed belt drive. The input shaft for the variable speed belt drive is driven by an engine through a torque converter. The C.V.T. output shaft drives a first speed reducer which drives a planetary reduction drive. The planetary reduction drives a differential and drive axles.

The planetary reduction drive includes an input drive sun gear which drives planet gears. The planet gears mesh with a fixed ring gear. A differential bevel gear carrier is also the planet gear carrier and is driven by the planet gears at a reduced speed.

A reverse gear drive may be provided between the first speed reducer and the planetary reduction drive or between the variable speed belt drive and the planetary reduction drive.

The use of a planetary reduction drive connected directly to the differential permits the first speed reducer and the reverse gear drive to run at higher speed and transmit less torque. The reduced torque allows the use of smaller components in the first speed reducer and the reverse gear drive. The size of the transmission package can be reduced due to the employment of smaller components in the first speed reducer and the reverse gear drive.

The planetary reduction drive associated with the differential can be easily modified to change the speed reduction ratio. By changing the speed reduction ratio, the transmission can accommodate different tyre sizes and different vehicle requirements.

In order that the present invention may be well understood there will now be described an embodiment thereof, given by way of example, reference being made to the accompanying drawings, in which:
Figure 1 is a sectional view of a continuously variable transmission and axle drive, taken through the drive shafts;
Figure 2 is a side elevation showing the relative location of the drive shafts and the belt and chain drives;
Figure 3 is a sectional view of the reverse drive planetary taken along line 3-3 in Figure 1; and
Figure 4 is a sectional view of the final drive reduction planetary taken along the line 4-4 in Figure 1.

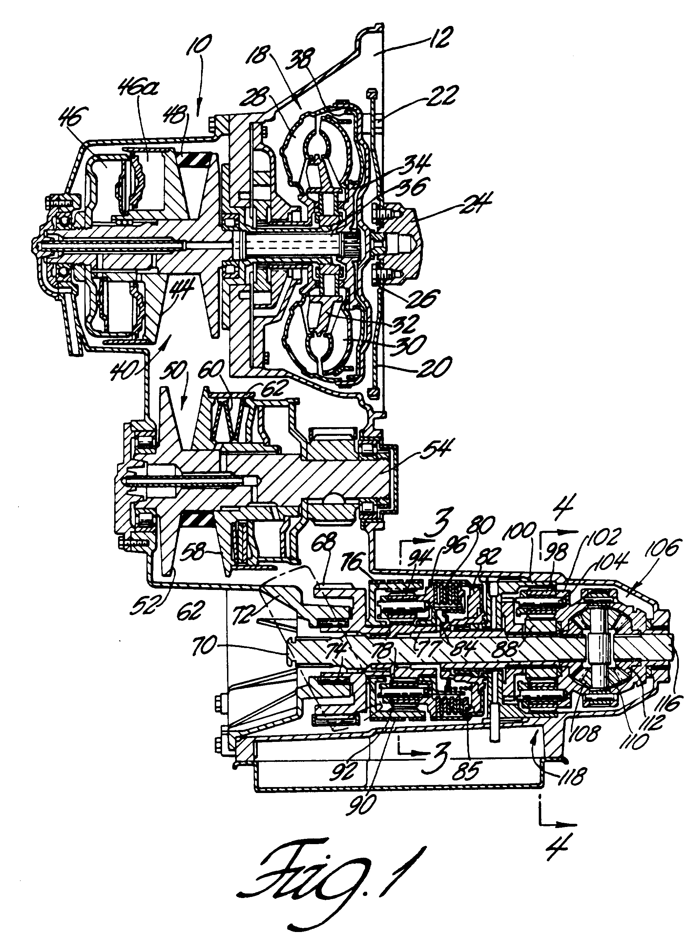

A continuously variable transmission (C.V.T.) 10 and axle drive has a bell housing 12 adapted to be bolted to an internal combustion engine by hollow dowels 14 and bolts that pass through holes 16. A torque converter 18, as shown in Figure 1, is bolted to a drive plate 20 by bolts 22. The drive plate 20 is bolted to an engine crankshaft 24, a portion of which is shown, by bolts 26. The impeller 28, which is rotated by the engine crankshaft 24 causes fluid to flow. The fluid contacts the turbine wheel 30 and causes it to rotate. The reactor 32 directs the flow of fluid. The turbine wheel 30 is attached to a hub member 34 which is splined to and drives the C.V.T input shaft 36. A lockup clutch 38 locks the torque converter 18 under some operating conditions.

The C.V.T. input shaft 36 drives a variable speed v-belt drive pulley 40. The variable speed drive pulley 40 includes a fixed sheave 42 that is an integral part of the input shaft 36 and an adjustable sheave 44 that is axially moveable on the input shaft. The adjustable sheave 44 is moved axially on the input shaft 36 to change the effective diameter of the variable speed drive pulley 40. Oil, under pressure, is directed into or out of the chambers 46 and 46a by a control system, which is not shown, to move the adjustable sheave 44.

A v-belt 48 is trained around the variable speed drive pulley 40 and a variable speed driven pulley 50. A sheave 52 of the variable speed driven pulley 50 is an integral part of the drive shaft 54. The shaft 54 and the sheave 52 both rotate about an axis 56. The driven pulley 50 includes an adjustable sheave 58 that is axially moveable on the drive shaft 54 and is biased towards the integral sheave 52. The bias is provided by a hydraulic control system which meters oil under pressure into and out of chambers 62 and 62a. Belleville washers or springs 60 provide tension on the v-belt during start up when hyraulic pressure is low. When the adjustable sheave 44 is moved axially by oil, under pressure, that is directed to or from the chambers 46 and 46a, the belleville springs 60 will expand or compress and the adjustable sheave 58 will move axially to maintain proper tension on the v-belt 48.

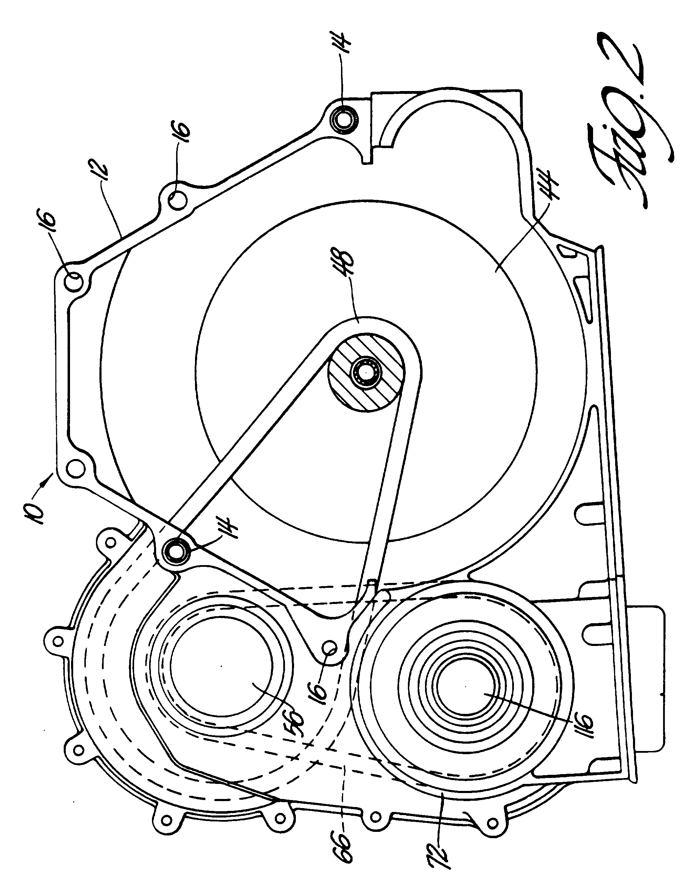

The v-belt 48 can change from a low speed position, as shown in Figure 2, to a high speed position when the chambers 46 and 46a are filled with oil, the adjustable sheave 44 is moved close to the fixed sheave 42 and the v-belt moves out to the outer edge of the variable speed drive pulley 40. When the v-belt 48 moves to the outer edge of the variable speed drive pulley 40, it also moves toward the centre of the driven pulley 50. With the v-belt 48 in the position shown in Figure 2, the drive shaft 54 will rotate at a slower speed than the input shaft 36. Moving the adjustable sheave 44 on the input shaft 36 toward the fixed sheave 42 will increase the speed of the drive shaft 54. When the adjustable sheave 44 is at its closest position to the fixed sheave 42, the drive shaft 54 will run faster than the input shaft 36. Some place in the middle of the travel range of the adjustable sheave 44, the drive shaft 54 will rotate at the same speed as the input shaft 36.

Oil under pressure can be directed into or out of the chambers 62 and 62a to move the adjustable sheave 58 toward or away from the fixed integral sheave 52. The adjustable sheave 58 is moved to control tension on the v-belt 48.

The drive shaft 54 rotates the drive sprocket 64. The drive sprocket 64 drives a silent chain 66 which is trained around the drive sprocket 64 and a driven sprocket 68 that is rotatable about the axis of axle 70. The drive sprocket 64 is smaller than the driven sprocket 68 to reduce the speed of the driven sprocket 68.

The driven sprocket 68 is rotatably supported on the housing 72 by a roller bearing 74. A ring gear 76 is rotatably journaled on the driven sprocket 68. The driven sprocket 68 is also connected to sleeve 77 by a spline. The sun gear 78 can be an integral part of the sleeve 77 or can be connected by a spline. When the forward clutch 80 is locked up by piston 82, torque is transmitted from the sun gear 78 to a clutch driving member 84, to the clutch outer housing 85 to the sleeve 86 and to the sun gear 88 splined to the sleeve 86.

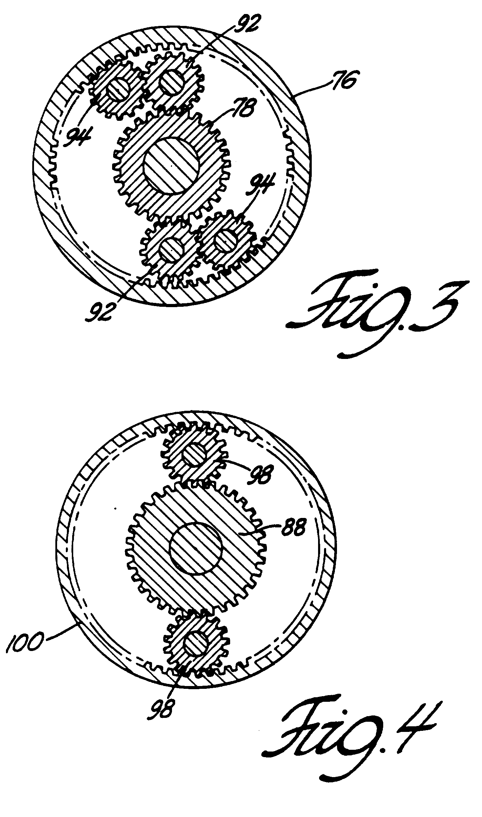

To reverse the drive, the forward clutch 80 is released and the brake band 90 is applied or tightened to hold the ring gear 76. The sun gear 78, as shown in Figure 3, will rotate the inner planet gears 92. The inner planet gears 92 rotate the outer planet gears 94 which react with the ring gear 76 to rotate the planet carrier 96 in the opposite direction to the direction of rotation of the sun gear 78. The planet carrier 96 is connected to the clutch outer housing 85, to the sleeve 86 and to the sun gear 88.

The forward reverse drive could, if desired, be moved in the drive train. It could, for example, be associated with the drive shaft 54. If associated with the drive shaft 54, it would be just after the variable speed drive. Such a location would change the size and shape of the total transmission package. Such a change in size and shape may have an advantage in some vehicles.

The sun gear 88 is a portion of the simple fixed ratio planetary reduction gear drive 118. The sun gear 88 drives planet gears 98. The planet gears 98 mesh with a fixed ring gear 100. The planet carrier 102 carries the pins 104 the planet gears 98 are journaled on. The planet carrier also supports and houses the differential 106. The differential 106 includes bevel gears 108 that are rotatably journaled on a shaft 110 supported in the planet carrier 102. Bevel gears 112, which are journaled in the planet carrier 102 and mesh with at least two of the bevel gears 108 are also part of the differential. The two beveled gears 112 journaled in the planet carrier 102 have splined bores which received splined ends of axles 70 and 116. The axles 70 and 116 are connected to axle extensions or shafts through constant velocity joints to wheels which drive and steer a vehicle.

The double planet reverse drive is shown in Figure 3 as including one sun gear 78, two inner planet gears 92 that mesh with the sun gear 78 and two outer planet gears 94, which each mesh with an inner planet gear 92 and the ring gear 76. The preferred form for the double planet reverse drive includes four inner planet gears 92 in mesh with the sun gear 78 and four outer planet gears 94 each of which is in mesh with the ring gear 76 and an inner planet gear 92.

The simple fixed ratio planetary reduction gear drive 118 is shown in Figure 4 with two planet gears 98 for simplification. The drive could be used with two planet gears 98. However, the preferred form of the simple fixed ratio planetary reduction gear drive 118 employs four planet gears 98.

The differential 106, as shown in Figure 1, has two bevel gears 108 rotatably journaled on a shaft 110. Differentials with two bevel gears that mesh with bevel gears 112 with spines that receive the axles 70 and 116 are common. It is, however, also common to use four bevel gears 108, if desired.

The first speed reducer, with sprockets 64 and 68, and a silent chain 66 trained around the sprockets could be replaced by meshing gears, if desired.

The simple fixed ratio planetary reduction gear drive 118, that is a portion of the differential 106 provides a number of advantages. It reduces the load on all gear train parts between the crankshaft 24 and the sun gear 88. As a result of the reduced load, the size and weight of all components can be reduced. The drive ratios provided by the transmission can be changed to meet vehicle requirements by changing the sprockets 64 and 68 and by changing the gear ratios in the planetary reduction gear drive 118. The ability to make drive ratio modifications in two places increases the versatility. There is a limit to the size sprocket 68 that will fit in the transmission housing. The drive ratios may be changed for different size tires, for different types of vehicles and for different vehicle uses. Vehicle trailer towing packages, for example, commonly include changes in the drive ratio.

## Claims

1. A continuously variable transmission having a first variable drive pulley (40), a second variable drive pulley (50), a V-belt (48) trained around the first and second variable drive pulleys (40, 50), and a speed reduction drive (64, 66, 68) driven by the second variable drive pulley (50), said continuously variable transmission including a fixed ratio planetary reduction drive (118) with a sun gear (88), a reversible gear drive (76, 78, 92, 94), and axle shafts (70, 116) driven by a differential (106), said differential (106) being driven by said fixed ratio planetary reduction drive (118),
characterized in that
- said reversible gear drive (76, 78, 92, 94) is driven by the speed reduction drive (64, 66, 68),
- said fixed ratio planetary reduction drive (118) with said sun gear (88) is axially spaced from and driven by said reversible gear drive (76, 78, 92, 94) in one direction or another.

2. A continuously variable transmission as claimed in claim 1, wherein the differential (106) is of the bevel gear type and includes a bevel gear carrier (102) which is also a planet carrier for the fixed ratio planetary reduction drive (118).

3. A continuously variable transmission as claimed in claim 1 or claim 2, wherein the reversible gear drive (76, 78, 92, 94) includes a sun gear (78) driven by the speed reduction drive (64, 66, 68), a first planet gear (92) in mesh with the sun gear (78), a second planet gear (94) in mesh with the first planet gear (92) and a ring gear (76) in mesh with the second planet gear (94).

4. A continuously variable transmission as claimed in claim 1 or claim 2, wherein the reversible gear drive (76, 78, 92, 94) includes a reversible planetary gear drive with a hollow sun gear (78) that is rotatable about an axis, the sun gear (88) in the fixed ratio planetary reduction drive (118) is also hollow and is rotatable about said axis, and one of the axle shafts (70, 116) which is driven by the bevel gears (108, 112) in the differential (106) passes through said hollow sun gears (88 and 78).

5. A continuously variable transmission as claimed in any of the preceding claims, wherein the speed reduction drive (64, 66, 68) includes a drive sprocket (64) driven by the second variable drive pulley (50), a driven sprocket (68) and a silent chain (66) trained around the drive sprocket (64) and the driven sprocket (68).

6. A continuously variable transmission as claimed in any of the preceding claims, including a torque converter (18), adapted to be driven by an internal combustion engine, which drives the first variable drive pulley (40).

## Patentansprüche

1. Stufenlos verstellbares Getriebe mit einer ersten verstellbaren Antriebsscheibe (40), einer zweiten verstellbaren Antriebsscheibe (50), einem V-Riemen (48), der um die erste und zweite Antriebsscheibe (40, 50) geführt ist, und einem Drehzahlreduktionsantrieb (64, 66, 68), der von der zweiten Antriebsscheibe (50) angetrieben wird, wobei das stufenlos verstellbare Getriebe ein Planetenreduktionsgetriebe (118) mit festem Reduktionsverhältnis mit einem Sonnenrad (88), ein Umkehrgetriebe (76, 78, 92, 94) und Achswellen (70, 116) umfaßt, die von einem Differentialgetriebe (106) angetrieben werden, wobei das Differential (106) vom Planetenreduktionsgetriebe (118) mit festem Reduktionsverhältnis angetrieben wird, dadurch gekennzeichnet, daß
- das Umkehrgetriebe (76, 78, 92, 94) vom Drehzahlreduktionsantrieb (64, 66, 68) angetrieben wird und
- das Planetenreduktionsgetriebe (118) mit festem Reduktionsverhältnis mit dem Sonnenrad (88) mit axialem Abstand zum Umkehrgetriebe (76, 78, 92, 94) angeordnet ist und von diesem in der einen oder anderen Richtung angetrieben wird.

2. Kontinuierlich verstellbares Getriebe nach Anspruch 1, bei dem das Differentialgetriebe (106) vom Kegelradtyp ist und einen Kegelradträger (102) aufweist, der ebenfalls als Planetenträger für das Planetenreduktionsgetriebe (118) mit festem Reduktionsverhältnis ausgebildet ist.

3. Kontinuierlich verstellbares Getriebe nach Anspruch 1 oder 2, bei dem das Umkehrgetriebe (76,78, 92, 94) ein vom Drehzahlreduktionsantrieb (64, 66 68) angetriebenes Sonnenrad (78), ein erstes Planetenrad (92), das mit dem Sonnenrad (78) kämmt, ein zweites Planetenrad (94), das mit dem ersten Planetenrad (92) kämmt, und ein Ringrad (76), das mit dem zweiten Planetenrad (94) kämmt, aufweist.

4. Kontinuierlich verstellbares Getriebe nach Anspruch 1 oder 2, bei dem das Umkehrgetriebe (76, 78, 92, 94) einen reversiblen Planetenradantrieb mit einem hohlen Sonnenrad (78), das um eine Achse drehbar ist, aufweist, das Sonnenrad (88) im Planetenreduktionsgetriebe (118) mit festem Reduktionsverhältnis ebenfalls hohl ausgebildet und um diese Achse drehbar ist und sich eine der Achswellen (70, 116), die von den Kegelrädern (108, 112) im Differentialgetriebe (106) angetrieben wird, durch die hohlen Sonnenräder (88 und 78) erstreckt.

5. Stufenlos verstellbares Getriebe nach einem der vorangehenden Ansprüche, bei dem der Drehzahlreduktionsantrieb (64, 66, 68) ein Antriebskettenrad (64), das von der zweiten verstellbaren Antriebsscheibe (50) angetrieben wird, ein angetriebenes Kettenrad (68) und eine geräuscharme Kette (66) umfaßt, die um das Antriebskettenrad (64) und das angetriebene Kettenrad (68) geführt ist.

6. Kontinuierlich verstellbares Getriebe nach einem der vorangehenden Ansprüche mit einem Drehmomentwandler (18), der von einer Brennkraftmaschine angetrieben werden kann, die die erste verstellbare Antriebsscheibe (40) antreibt.

## Revendications

1. Transmission variable en continu comportant une première poulie à rapport variable (40), une seconde poulie à rapport variable (50), une courroie trapézoïdale (48) passant autour des première et seconde poulies à rapport variable (40, 50), et un train réducteur (64, 66, 68) entraîné par la seconde poulie à rapport variable (50), ladite transmission variable en continu comprenant un entraînement par train planétaire réducteur à rapport fixe (118) comportant une roue solaire (88), un train inverseur (76, 78, 92, 94), et des essieux (70, 116) entraînés par un différentiel (106), ledit différentiel (106) étant entraîné par ledit train planétaire réducteur à rapport fixe (118),
caractérisé en ce que
- ledit train inverseur (76, 78, 92, 94) est entraîné par le train réducteur (64, 66, 68), et
- ledit train planétaire réducteur à rapport fixe (118) comportant ladite roue solaire (88) est espacé axialement de et entraîné par ledit train inverseur (76, 78, 92, 94) dans une direction ou l'autre.

2. Transmission variable en continu selon la revendication 1, dans laquelle le différentiel (106) est du type à roues coniques et comprend un boîtier de roues coniques (102) qui constitue également un porte-satellites du train planétaire réducteur à rapport fixe (118).

3. Transmission variable en continu selon la revendication 1 ou la revendication 2, dans laquelle le train inverseur (76, 78, 92, 94) comprend une roue solaire (78) entraînée par le train réducteur (64, 66, 68), un premier satellite (92) en engrènement avec la roue solaire (78), un second satellite (94) en engrènement avec le premier satellite (92) et une couronne (76) en engrènement avec le second satellite (94).

4. Transmission variable en continu selon la revendication 1 ou la revendication 2, dans laquelle le train inverseur (76, 78, 92, 94) comprend un train planétaire inverseur comportant une roue solaire creuse (78) qui peut tourner autour d'un axe, la roue solaire (88) du train planétaire réducteur à rapport fixe (118) est également creuse et peut tourner autour dudit axe, et l'un des arbres d'essieu (70, 116) qui est entraîné par les roues coniques (108, 112) du différentiel (106) passe au travers desdites roues solaires creuses (88 et 98).

5. Transmission variable en continu selon l'une quelconque des revendications précédentes, dans laquelle le train réducteur (64, 66, 68) comprend une poulie à chaîne menante (64) entraînée par la seconde poulie à rapport variable (50), une poulie à chaîne menée (68) et une chaîne silencieuse (66) passant autour de la roue à chaîne menante (64) et de la roue à chaîne menée (68).

6. Transmission variable en continu selon l'une quelconque des revendications précédentes, comprenant un convertisseur de couple (18), conçu pour être entraîné par un moteur à combustion interne, qui entraîne la première poulie à rapport variable (40).
